Europäisches Patentamt

European Patent Office

Office européen des brevets

(11) Veröffentlichungsnummer: **0 163 169**
**A2**

## (12) EUROPÄISCHE PATENTANMELDUNG

(21) Anmeldenummer: **85105525.1**

(22) Anmeldetag: **06.05.85**

(51) Int. Cl.⁴: **H 01 S 3/03**
**H 01 S 3/04**

(30) Priorität: **01.06.84 DE 3420605**

(43) Veröffentlichungstag der Anmeldung:
**04.12.85 Patentblatt 85/49**

(84) Benannte Vertragsstaaten:
**CH DE FR GB IT LI NL SE**

(71) Anmelder: **Siemens Aktiengesellschaft**
**Berlin und München Wittelsbacherplatz 2**
**D-8000 München 2(DE)**

(72) Erfinder: **Golser, Hans, Ing.-grad.**
**Therese-Giehse-Allee 38**
**D-8000 München 83(DE)**

(54) **Luftgekühltes Entladungsrohr für einen Gaslaser und seine Verwendung.**

(57) Das vorgeschlagene Plasmarohr ist eine Metall-Keramik-Struktur mit folgendem Aufbau: Massive Kupferplatten (4), bei denen das Verhältnis zwischen Wandstärke und Außendurchmesser zwischen 0,08 und 0,3 liegt, sind durch $Al_2O_3$-Ringe (1) voneinander beabstandet. Zwischen den Platten und den Ringen befindet sich jeweils noch ein Anpaßring (3), der aus einem thermisch an die Ringkeramik angepaßten Metall besteht. Alle diese Teile sind zu einer selbsttragenden, vakuumdichten Einheit miteinander verlötet. Jede Kupferplatte wird außerdem von einem angelöteten Kühlblech (5) umschlossen und umgibt ihrerseits ein Keramikröhrchen (7). Dieses Röhrchen ist in die Platte eingelötet, und um diese Verbindung nach Möglichkeit zu entlasten, hat die Platte mehrere, radial vom Röhrchen ausgehende Schlitze (8).

Hauptanwendungsgebiet: $Ar^+$-Laser mit etwa 100mW Ausgangsleistung.

FIG 1

Siemens Akteingesellschaft        |          Unser Zeichen 63169
Berlin und München                        VPA   84 P 1419 E

Luftgekühltes Entladungsrohr für einen Gaslaser und
seine Verwendung.

Die Erfindung bezieht sich auf ein Entladungsrohr gemäß dem Oberbegriff des Anspruchs 1. Eine solche Röhre wird in der US-PS 37 53 144 (Ausführungsbeispiel der dortigen Figur 2) im Zusammenhang mit Ionen-Gaslasern beschrieben.

Die bekannte Röhrenausführung ist folgendermaßen aufgebaut: Mehrere äquidistant hintereinander liegende, aus Kupfer oder Stahl bestehende Bleche sind mit jeweils zwischengeordneten Keramikringen zu einer selbsttragenden, vakuumdichten Struktur vereinigt. Die Bleche ragen außen über die Ringe hinaus und sind in ihrem zentralen Bereich, in dem sie eine größere Wandstärke haben, mit einer Durchtrittsöffnung versehen. In die Öffnungen sind jeweils Röhrchen eingeschoben, die in Richtung der Röhrenlängsachse fluchtend hintereinander liegen und den eigentlichen Entladungskanal definieren.

Wie die Röhrchen beschaffen und fixiert sind, geht aus der zitierten Literaturstelle nicht eindeutig hervor. Verwendet man Keramikröhrchen, die sich bekanntlich durch eine extrem hohe Sputterresistenz auszeichnen, so macht die Verankerung in den Blechen gewisse Schwierigkeiten. Zumindest bei Lasern mittlerer und höherer Leistung reicht es aus thermischen und mechanischen Gründen nicht aus, die Keramikteile entsprechend der US-PS 35 01 714 nur einzuschieben und nicht weiter zu fixieren. Die Verhältnisse werden im allgemeinen auch nicht viel besser, wenn man das Blech aufschrumpft (US-PS 3437950), denn die Andruckkräfte lassen bei den vorherrschenden Betriebstemperaturen - in einem $Ar^+$-Laser kann die Verbindungsstelle mehrere hundert Grad Celsius heiß werden -

Les 1 Lk/01.6.1984

deutlich nach. Die eingangs genannte Patentschrift läßt im übrigen auch offen, in welcher Weise die vakuumdichte Keramik/Metall-Verbindung gestaltet werden könnte. In der DE-PS 17 64 359 wird eine Verbindungstechnik diskutiert, bei der metallisierte Berylliumoxidscheiben mit Kupferringen verlötet werden. Zuverlässige Abdichtungen kommen hier aber nur mit dünnen Blechen zustande, die die unvermeidlichen Thermospannungen durch ihre Duktilität in Grenzen halten. Solche Folien sind aber zum Haltern der Röhrchen und insbesondere zum Ableiten der Verlustwärme weniger geeignet.

Der Erfindung liegt die Aufgabe zugrunde, ein Plasmarohr der eingangs genannten Art anzugeben, das frei ist von störenden Sputtereffekten, thermisch hoch belastet werden kann und überdies relativ preisgünstig ist. Diese Aufgabe wird erfindungsgemäß durch Rohr mit den Merkmalen des Patentanspruchs 1 gelöst.

Der vorgeschlagene Röhrentyp verfügt über eine besonders große Wärmetransportkapazität, weil die von den Keramikröhrchen aufgenommene Wärme über großflächige Lotbrücken in massive Kupferscheiben übertragen und dann ohne weiteren Übergang bis in den Außenraum abgeleitet wird. Die Verbindung zwischen dem dünnwandigen Röhrchen und der Scheibe ist unkritisch, und zwar auch dann, wenn man eine preiswerte, nicht sonderlich wärmeleitfähige Keramik wie $Al_2O_3$ verwendet; sie ist nämlich wegen des guten Wärmeleitvermögens sowieso schon relativ kühl und wird durch die Scheibenschlitze noch zusätzlich entlastet. Auch die Lotverbindung Scheibe/Ring kann - trotz der relativ großen Scheibendicke - dauerhaft dicht bleiben. Zwischen beiden Teilen befindet sich nämlich ein metallischer Anpaßring, der den durch $Al_2O_3$ einerseits und Cu andererseits vorgegebenen Sprung in den thermischen Ausdehnungskoeffizienten in eine Metall/Metall-Verbindung verlegt, wo er unproblematisch ist.

Vorteilhafte Ausgestaltungen und Weiterbildungen der Erfindung sind Gegenstand zusätzlicher Ansprüche.

Der Lösungsvorschlag soll nun anhand eines bevorzugten Ausführungsbeispiels unter Bezugnahme auf die beigefügte Zeichnung näher erläutert werden. In den Figuren sind einander entsprechende Teile mit gleichem Bezugszeichen versehen. Es zeigen:

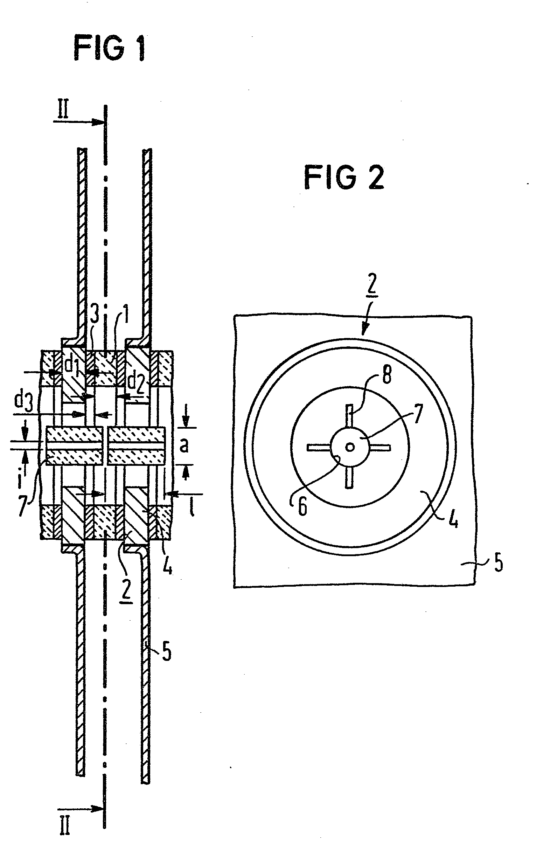

Fig. 1 ein erfindungsgemäßes Entladungsrohr in einem teilweise weggebrochenen Seitenschnitt und

Fig. 2 das Entladungsrohr der Fig. 1 im Schnitt II-II.

Die dargestellte Röhre enthält im einzelnen Keramikringe 1 und Metallscheiben 2, die abwechselnd hintereinander angeordnet sind und jeweils durch metallische Anpaßringe 3 voneinander getrennt werden. Alle diese Teile sind zu einer selbsttragenden, hermetisch dichten Einheit verlötet.

Jede Metallscheibe besteht aus zwei Teilen, einer inneren, mit den Ringen verbundenen Platte 4 und einem äußeren Kühlblech 5, das die Platte umschließt und mit ihr verlötet ist. Die Platte hat eine zentrale Öffnung 6, in der jeweils ein Keramikröhrchen 7 eingesetzt und festgelötet ist. Um die Lötverbindung möglichst spannungsfrei zu halten, weist die Platte mehrere, radial von der Öffnung ausgehende Schlitze 8 auf. Im vorliegenden Fall sind es vier, in Umfangsrichtung um jeweils 90° versetzte Schlitze.

Die Teile sind folgendermaßen beschaffen und dimensioniert: Die Keramikringe und -röhrchen bestehen aus Aluminiumoxid, die Platten und Bleche aus Kupfer und die Anpaßringe aus einer FeCoNi-Legierung. Diese Legierung ist thermisch an $Al_2O_3$ angepaßt, das heißt, für die beiden thermischen Ausdehnungskoeffizienten $\alpha_{FeCoNi}$ und $\alpha_{Al_2O_3}$ gilt die Relation $|(\alpha_{FeCoNi} - \alpha_{Al_2O_3})/\alpha_{FeCoNi}| < 0,1$. Die Keramikringe haben außen und innen einen Durchmesser von etwa 22mm bzw. 14mm sowie eine Dicke $d_2$ von 2,5mm. Die Anpaßringe

0163169

haben den gleichen Außen- und Innendurchmesser und eine Stärke $d_3$ von etwa 1mm. Außendurchmesser (D) und Dicke ($d_1$) der Platten haben Werte von 23mm bzw. 3mm; die zentrale Plattenöffnung ist 4mm weit. Die Bleche haben einen Außendurchmesser von knapp 80mm und sind etwa 1mm dick. Die Schlitze sind etwa 2,5mm tief und 0,5mm breit. Die Keramikröhrchen haben eine Länge l von etwa 7mm, einen Außendurchmesser ä von 3mm und eine Bohrung mit einer Weite von etwa 1mm.

Die Erfindung ist nicht auf das dargestellte Ausführungsbeispiel beschränkt. So kann die Röhre auch bei anderen Gaslasertypen, etwa $Kr^+$-Lasern, Anwendung finden. Davon abgesehen kann es sich im Einzelfall auch empfehlen, die Kühlbleche aus einem anderen gut wärmeleitenden Metall, beispielsweise Aluminium, zu fertigen.

10 Patentansprüche 2 Figuren

## Patentansprüche

1. Luftgekühltes Entladungsrohr für einen Gaslaser, mit folgenden Merkmalen:

1) es enthält abwechselnd hintereinander liegende Keramikringe (1) und Kupferscheiben (2);

2) die Kupferscheiben (2) sind mit einer zentralen Öffnung (6) versehen, haben zumindest im Bereich ihrer zentralen Öffnung (6) eine vergrößerte Wandstärke und besitzen einen seitlich über die Keramikringe (1) hinausragenden Bereich (Kühlbereich);

3) in den zentralen Scheibenöffnungen (6) befindet sich jeweils ein koaxial zum Entladungsrohr erstrecktes Röhrchen (7);

dadurch gekennzeichnet, daß

4) jede Kupferscheibe (2) bis auf ihren Kühlbereich einen Bereich mit einer auf einen konstanten Wert ($d_1$) vergrößerten Wandstärke hat, wobei gilt

$$0,08 \leq d_1/D \leq 0,3 , \text{ insbesondere } 0,1 \leq d_1/D \leq 0,2$$

(D = Außendurchmesser des Scheibenbereichs mit der Wandstärke $d_1$);

5) jede Kupferscheibe (2) mehrere, radial von ihrer zentralen Öffnung (6) ausgehende Schlitze (8) enthält; und daß

6) zwischen den aus Aluminiumoxid bestehenden Keramikringen (1) und den Kupferscheiben (2) jeweils ein Ring (Anpaßring 3) aus einem thermisch an Aluminiumoxid angepaßten Metall angeordnet ist und alle diese Teile jeweils vakuumdicht miteinander verlötet sind.

2. Rohr nach Anspruch 1, dadurch gekennzeichnet, daß bei jeder Kupferscheibe (2) der Kühlbereich und der Bereich mit der Wandstärke $d_1$ jeweils gesonderte, miteinander verlötete Teile (Kühlblech 5, Platte 4) sind.

3. Rohr nach Anspruch 2, d a d u r c h g e k e n n - z e i c h n e t, daß die Platten mindestens doppelt so dick wie die Bleche sind.

4. Rohr nach einem der Ansprüche 1 bis 3, d a d u r c h g e k e n n z e i c h n e t, daß gilt $0,6 \leq d_2/d_1 \leq 1,3$, insbesondere $0,75 \leq d_2/d_1 \leq 1,0$ ($d_2$ = Dicke des Aluminiumoxidrings 1).

5. Rohr nach einem der Ansprüche 1 bis 4, d a d u r c h g e k e n n z e i c h n e t, daß gilt $0,2 \leq d_3/d_1 \leq 0,4$, insbesondere $0,3 \leq d_3/d_1 \leq 0,38$ ($d_3$ = Dicke des Anpaßrings 3).

6. Rohr nach einem der Ansprüche 1 bis 5, d a d u r c h g e k e n n z e i c h n e t, daß die Anpaßringe (3) aus Molybdän oder einer FeCoNi-Legierung bestehen.

7. Rohr nach einem der Ansprüche 1 bis 6, d a d u r c h g e k e n n z e i c h n e t, daß gilt $2 \leq l/d_1 \leq 3$, $1 \leq a/d_1 \leq 1,6$ und $0,2 \leq i/d_1 \leq 0,4$ (l, a und i = Länge, Außen- und Innendurchmesser der Keramikröhrchen 7).

8. Rohr nach einem der Ansprüche 1 bis 7, d a d u r c h g e k e n n z e i c h n e t, daß die Keramikröhrchen (7) aus Aluminiumoxid, Berylliumoxid oder Aluminiumnitrid bestehen.

9. Rohr nach einem der Ansprüche 1 bis 8, g e k e n n - z e i c h n e t  d u r c h  seine Verwendung mit einem $Ar^+$-Laser mit einer Ausgangsleistung zwischen 10mW und 200mW, insbesondere zwischen 50mW und 125mW.

## FIG 1

II

3  1

d1
d2

d3

a

i

7

t

4

2

5

## FIG 2

2

8

7

6

4

5